Europäisches Patentamt

European Patent Office

Office européen des brevets

(19)

(11) **EP 1 359 547 A2**

(12) **DEMANDE DE BREVET EUROPEEN**

(43) Date de publication:
**05.11.2003 Bulletin 2003/45**

(51) Int Cl.⁷: $G06T\ 9/00$, $H04N\ 7/30$

(21) Numéro de dépôt: **03075050.9**

(22) Date de dépôt: **08.01.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **29.03.2002 FR 0204014**

(71) Demandeur: **Koninklijke Philips Electronics N.V.**
**5621 BA Eindhoven (NL)**

(72) Inventeur: **Jung, Joel**
**75008 Paris (FR)**

(74) Mandataire: **Chaffraix, Jean**
**Société Civile S.P.I.D.**
**156, Boulevard Haussmann**
**75008 Paris (FR)**

(54) **Procédé de traitement d'images numériques pour applications bas débit**

(57)     La présente demande concerne un procédé de traitement d'images numériques comprenant des blocs de pixels, ledit procédé comprenant une étape de détection d'artefacts de blocs (41) entre deux blocs adjacents (Bj,Bk), et une étape de filtrage (43) de la paire de blocs adjacents. Le procédé selon la demande comprend en outre une étape de décision de filtrage (42) basée sur une comparaison entre des valeurs de luminance des pixels des deux blocs adjacents et une fonction de référence représentant une différence de valeurs de luminance minimale visible par un observateur en fonction d'une luminance moyenne d'une zone de l'image afin de déterminer si une différence de luminance entre les deux blocs est visible ou non pour un observateur.

FIG. 4

EP 1 359 547 A2

## Description

### Domaine technique de l'invention

La présente invention concerne un procédé de traitement d'images numériques comprenant des blocs de pixels, ledit procédé comprenant une étape de détection d'artefacts de blocs entre deux blocs adjacents, et une étape de filtrage de la paire de blocs adjacents.

Elle concerne également un dispositif de traitement mettant en oeuvre un tel procédé de traitement d'images.

Elle trouve notamment son application dans le domaine du codage vidéo bas débit. La technique de codage est basée par exemple sur la norme H.26L ou une norme équivalente, grâce à laquelle une séquence d'images numériques est précédemment codée puis décodée sous forme de blocs de données, la présente invention permettant la correction des blocs de données décodées afin d'atténuer les artefacts visuels causés par la technique de codage par blocs. Ainsi, elle pourra être avantageusement intégrée dans des appareils portables tels que des téléphones mobiles ou des assistants numériques personnels.

### Etat de la technique antérieure

Avec l'essor d'Internet et des appareils portables, il est apparu nécessaire de transmettre des données vidéo sur des réseaux mobiles pour des applications à bas débits et en temps réel. Des techniques de codage ont été mises en oeuvre pour ce type d'applications, comme par exemple les standards MPEG-4 ou H.26L, ces techniques étant basées sur une transformation discrète par blocs. En parallèle, se sont développées des techniques de correction des effets de blocs plus spécifiquement dédiées aux bas débits afin de corriger les artefacts de blocs dus à ces techniques de codage par blocs.

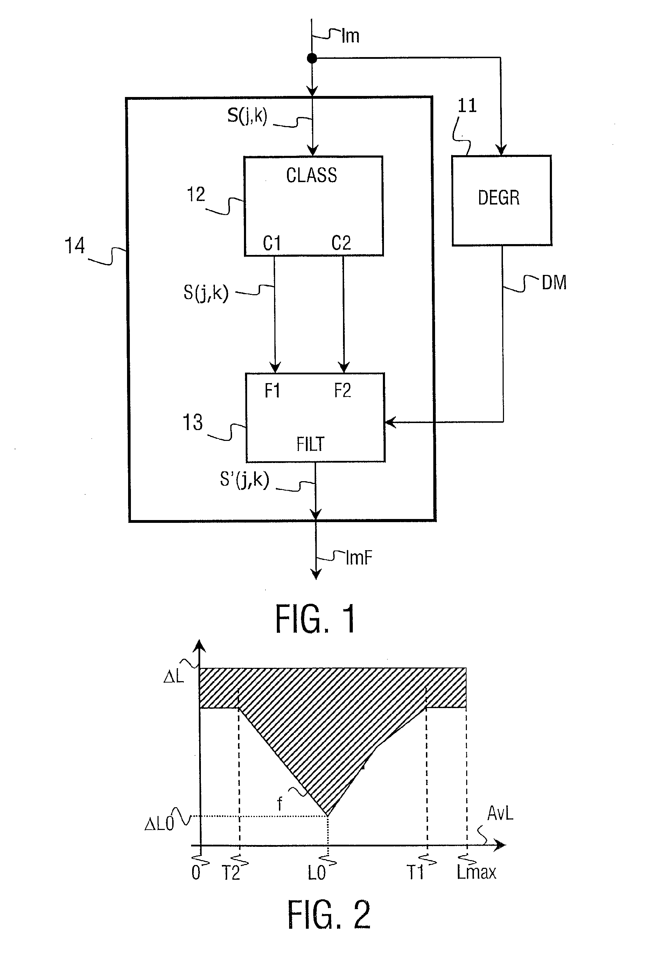

La technique de post-traitement d'une image numérique décodée mise en oeuvre dans le standard MPEG-4 est décrite dans le document de l'organisation internationale de normalisation ISO/IEC JTC 1/SC 29/WG 11, intitulé « Technologie de l'information - Codage des objets audiovisuels - Partie 2 : visuel », N 3056, pages 454-56, publié le 31/01/2000. Elle vise à corriger les effets de blocs éventuellement présents dans des images numériques codées et décodées par la norme MPEG-4. Cette technique de post-traitement est décrite Fig. 1, et comporte les étapes suivantes :

- une étape de d'évaluation de la dégradation DEGR (11) d'une image numérique Im, qui reçoit en entrée ladite image numérique Im et délivre une mesure de la dégradation DM de l'image,
- une étape de classification CLASS (12), qui reçoit en entrée un segment S(j,k) de ligne ou de colonne de pixels de deux blocs adjacents (Bj,Bk) de ladite image numérique Im, et lui attribue une classe Ci parmi un ensemble de deux classes possibles, une classe uniforme C1 et une classe texturée C2,
- une étape de filtrage FILT (13), qui reçoit en entrée le segment de ligne ou de colonne de pixels S(j,k) et, en fonction de la mesure de dégradation DM, délivre ou non un segment filtré S'(j,k) à l'aide du filtre F1 si le segment S(j,k) est de classe C1 et à l'aide du filtre F2 si le segment S(j,k) est de classe C2.

Les étapes de classification CLASS (12) et FILT (13) s'appliquent à des segments de lignes ou de colonnes de pixels de deux blocs adjacents et sont, par conséquent, mises en oeuvre à l'intérieur d'une boucle (14) de balayage des segments de lignes et de colonnes de l'image numérique Im. Une fois le balayage effectué, on obtient une image numérique filtrée ImF.

Un inconvénient majeur de ce procédé de traitement d'images réside dans sa complexité, qui, bien que du même ordre de grandeur que d'autres techniques concurrentes, reste prohibitive pour des applications en temps réel et à bas débits dédiées, par exemple, aux terminaux mobiles.

### Exposé de l'invention

La présente invention a pour but de proposer un procédé de traitement d'images numériques qui soit moins complexe pour une efficacité comparable.

A cet effet, le procédé de traitement d'images numériques selon l'invention est remarquable en ce que l'étape de filtrage est appliquée en fonction d'une comparaison entre des valeurs de luminance des pixels des deux blocs adjacents et une fonction de référence représentant une différence de valeurs de luminance minimale visible par un observateur en fonction d'une luminance moyenne d'une zone de l'image.

Ainsi, la comparaison des valeurs de luminance des deux blocs adjacents et de la fonction de référence a pour effet de déterminer si une différence de luminance entre les deux blocs est visible ou non pour un observateur. Si elle n'est pas visible, alors il n'est pas utile de filtrer la paire de blocs adjacents. La présente invention permet donc de réduire la complexité du procédé de traitement d'images numériques par rapport au procédé de l'état de la technique antérieure, seuls les artefacts de blocs à priori visibles étant filtrés d'où une réduction du nombre d'opérations de filtrage à effectuer. Elle conserve cependant une efficacité comparable à celle du procédé de l'état de la technique antérieure, la fonction de référence utilisée étant particulièrement précise.

La présente invention concerne également un procédé de décodage comprenant un tel procédé de traitement d'images numériques et le décodeur vidéo le mettant en oeuvre.

La présente invention concerne également un procédé de codage comprenant un tel procédé de traitement d'images numériques et le codeur vidéo le mettant en oeuvre.

La présente invention concerne enfin un produit programme d'ordinateur implémentant le procédé de traitement d'images numériques selon l'invention.

La réduction de la complexité du procédé de traitement selon l'invention fait qu'elle est possible à mettre en oeuvre sur des appareils portables disposant de faibles ressources de calcul, de type téléphone mobile ou assistants personnels numériques. Pour de telles applications, les méthodes de traitement proposées dans l'état de la technique antérieure allaient jusqu'à prendre environ 50 % des ressources de calcul lors de la visualisation d'une séquence d'images numériques. Avec le procédé de traitement d'images numériques selon l'invention, cette proportion se trouve considérablement réduite, permettant en outre d'avoir des appareils portables à plus faible consommation.

## Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 est un schéma bloc du procédé de post-traitement d'images numériques selon l'état de la technique antérieure,
- la Fig. 2 est une fonction représentant la différence de valeurs de luminance minimale visible par un observateur en fonction de la luminance moyenne d'une zone de l'image,
- la Fig. 3 représente une frontière entre deux blocs adjacents,
- la Fig. 4 est un schéma bloc du procédé de traitement d'images numériques selon l'invention,
- la Fig. 5 est un schéma bloc du procédé de traitement d'images numériques selon le mode de réalisation préféré de l'invention,
- la Fig. 6 décrit un sous-bloc considéré à l'intérieur d'un bloc pour le choix d'une classe au sein d'une sous-étape de classification,
- la Fig. 7 représente des associations de paires de classes et d'un filtre en fonction d'une mesure de dégradation,
- la Fig. 8 représente quatre filtres de lissage, qui peuvent être utilisés de façon avantageuse par le procédé de traitement d'images numériques selon l'invention,
- la Fig. 9 est un schéma bloc du procédé de décodage incluant le procédé de traitement d'images numériques selon l'invention, et
- la Fig. 10 est un schéma bloc du procédé de codage incluant le procédé de traitement d'images numériques selon l'invention.

## Exposé détaillé d'au moins un mode de réalisation de l'invention

La présente invention concerne un procédé de traitement d'une séquence d'images numériques codées et décodées selon une technique de codage par blocs, pour des applications à bas débit et en temps réel. La technique de codage mise en oeuvre est dans notre exemple la norme H.26L, mais peut être également la norme MPEG-4 ou toute autre norme équivalente. Il faut noter que ce procédé pourrait également s'appliquer à une image fixe, codée par exemple par la norme JPEG.

Une telle technique de codage par blocs décompose une image numérique en blocs. Dans le cas de la norme H.26L, lesdits blocs sont de 4 lignes de 4 pixels. Lors du codage, lesdits blocs sont ensuite soumis à une transformation fréquentielle. Dans le cas de la norme H.26L et de la plupart des techniques standards, il s'agit de la transformation en cosinus discrète DCT (de l'anglais « Discrete Cosinus Transform »). Lors du décodage, des effets de blocs peuvent apparaître aux frontières de blocs. Un effet de bloc ressemble à un bord, mais il n'a aucune existence réelle dans le contenu de l'image proprement dit. L'objectif de l'invention est notamment d'éliminer ces « faux » bords situés aux frontières de blocs de façon aussi efficace mais beaucoup moins complexe que les méthodes classiques.

La présente invention est basée sur une fonction de référence schématisée à la Fig. 2. Cette fonction f est décrite plus précisément dans l'article de H.R. Wu and M. Yuen intitulé "A generalized block-edge impairments metric for video coding" et publié dans IEEE Signal Processing letters, vol.4, n.11, pp317-320, nov.1997. Elle représente la différence de valeurs de luminance minimale visible ΔL par un observateur en fonction de la luminance moyenne AvgL d'une zone de l'image, sensiblement égale à la surface couverte par une paire de blocs adjacents. Cette fonction passe par un minimum ΔL0, égal à environ 1 ou 2 unités, pour une valeur moyenne de luminance L0 égale à environ 70 si la luminance est codée entre 0 et Lmax=255. Si la valeur moyenne de luminance d'une zone de l'image est inférieure à un premier seuil prédéterminé T1, la différence de valeurs de luminance visible dans cette zone correspond vraisemblablement à un contour naturel. De même, si la luminance moyenne est supérieure à un second seuil prédéterminé T2 la différence de valeurs de luminance visible correspond également, selon toute vraisemblance, à un contour naturel.

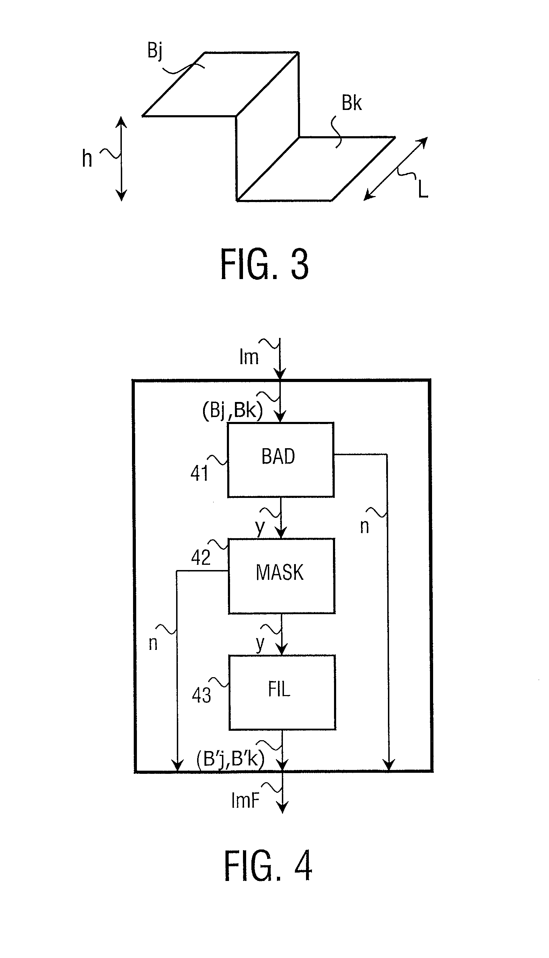

La zone hachurée sur la Fig. 2 représente les différences de luminance visibles par un observateur. Soit une paire de blocs adjacents Bj et Bk de pixels ayant une valeur moyenne de luminance prédéterminée avgBjBk et une différence de valeurs de luminance h telle que représentée à la Fig. 3. Si les coordonnées avgBjBk et h positionnent la paire de blocs adjacents dans la zone hachurée, alors l'artefact de bloc correspondant à la différence de valeurs de luminance h sera visible. Dans le cas contraire, il ne le sera pas. Il est à noter que la différence de luminance est soit la valeur exacte entre les deux blocs si chacun des deux blocs est uniforme, ou encore si on travaille sur des segments adjacents et non sur des blocs adjacents. Ce peut être également la différence moyenne de luminance entre les deux blocs ou encore la différence minimale ou maximale si l'on souhaite économiser les ressources de calcul.

La Fig. 4 décrit le procédé de traitement d'images numériques selon l'invention. Ledit procédé comprend :

- une étape de détection d'artefacts de blocs BAD (41) entre deux blocs adjacents (Bj,Bk) d'une image Im, qui fournit la paire de blocs soit à une étape de décision de filtrage si un artefact de bloc est détecté entre les deux blocs (y), soit directement en sortie du procédé dans le cas contraire(n),
- une étape de décision de filtrage MASK (42), basée sur le principe qui vient d'être décrit, qui fournit la paire de blocs soit à une étape de filtrage si l'artefact de bloc détecté entre les deux blocs est visible (y), soit directement en sortie du procédé dans le cas contraire(n),
- une étape de filtrage FILT (43) de la paire de blocs adjacents, qui fournit une paire de blocs adjacents filtrés (B'j, B'k), l'ensemble des blocs traités par le procédé donnant l'image finale ImF.

La présente invention tire partie de la Fig. 2, du fait que l'étape de filtrage est appliquée en fonction d'une comparaison des valeurs de luminance des deux blocs adjacents et la fonction de référence f, ceci quelles que soient les méthodes utilisées pour la détection d'artefacts de blocs et pour le filtrage.

Dans le mode de réalisation préféré, l'étape de filtrage n'est pas appliquée à une paire de blocs adjacents si les minima MinP et MinQ des valeurs de luminance des pixels de chaque bloc sont supérieurs à un premier seuil prédéterminé T1 et si les maxima MaxP et MaxQ des valeurs de luminance des pixels de chaque bloc sont inférieurs à un second seuil prédéterminé T2, le second seuil étant inférieur au premier. Autrement dit, il n'y a pas de filtrage si :

- MinP > T1 et MinQ > T1, i.e. les pixels appartiennent tous à une zone claire de l'image,
- Ou si MaxP < T2 et MaxQ < T2, i.e. les pixels appartiennent tous à une zone foncée de l'image

Ainsi, aucune valeur moyenne n'est calculée, le procédé n'utilisant que des comparaisons, d'une part, entre les valeurs de luminance des pixels afin de déterminer des minima et des maxima, et, d'autre part, entre les minima et les maxima des valeurs de luminance et deux seuils prédéterminés. Le procédé n'a donc besoin que de ressources de calcul limitées ce qui réduit d'autant sa complexité.

De manière avantageuse, les premier et second seuils T1 et T2 sont prédéterminés en fonction d'une valeur du pas de quantification QP de la façon suivante :

- Si QP ∈ [1-4], T1=210 et T2=45,

- Si QP ∈ [5-26], T1=215 et T2=40,

- Si QP ∈ [27-31], T1=220 et T2=35,

De manière avantageuse, l'étape de filtrage n'est pas appliquée si une différence de valeurs de luminance h entre les deux blocs adjacents est inférieure à une valeur de référence égale à une valeur de la fonction de référence f calculée pour la valeur moyenne de luminance avgBjBk de la paire de blocs, autrement dit si :

$$h < f(avgBjBk).$$

Ainsi, un plus grand nombre de paire de blocs est susceptible de ne pas être filtré, la condition étant plus générale et cumulative avec les deux conditions précédentes. Le procédé est cependant plus complexe car il nécessite de calculer une valeur moyenne avgBjBk.

De manière avantageuse, l'étape de filtrage n'est pas appliquée si une longueur L de l'artefact de bloc est inférieure à une valeur prédéterminée qui est fonction de la différence de valeurs de luminance h entre les deux blocs adjacents.

En effet, une différence de luminance h de 1 ou 2 peut être invisible si elle se produit sur 1 ou 2 pixels consécutifs, mais devenir visible sur une longueur L de 16 pixels consécutifs pour une luminance moyenne donnée. La condition précédente devient alors :

Si h < f(avgBjBk)/g(L), alors on ne filtre pas, où g est une fonction de pondération dépendant de la variable L.

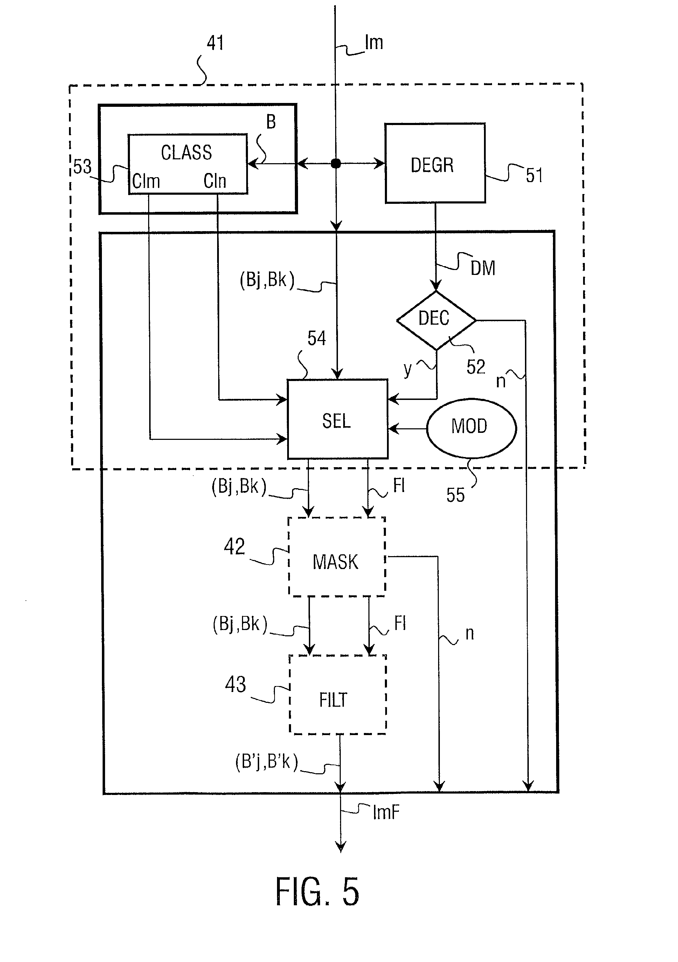

Dans le mode de réalisation préféré de l'invention, l'étape de détection d'artefacts de blocs (41) est illustrée à la Fig. 5. Elle est décrite plus en détails dans la demande de brevet français 02 00487 non encore publiée. L'étape de détection d'artefacts de blocs comprend les sous-étapes suivantes.

- Une image numérique décodée Im est d'abord présentée en entrée d'une sous-étape d'évaluation de dégradation DEGR (51), qui délivre une mesure de dégradation DM de l'image numérique Im. La mesure de dégradation DM correspond, par exemple, à la valeur d'un pas de quantification de l'image ou encore à une valeur sensiblement modifiée dudit pas de quantification en fonction de caractéristiques connues de la technique de codage utilisée.
- Une sous-étape de décision de filtrage DEC (52) à partir de la mesure de dégradation DM vient ensuite. Ladite sous-étape décide, pour une paire de blocs adjacents (Bj,Bk) de l'image Im et pour la mesure de dégradation DM, si une sous-étape de filtrage est nécessaire ou non. La décision de filtrer est prise, par exemple, selon le critère suivant :

    - Si la différence de luminance maximale entre les blocs Bj et Bk est inférieure à 1.5 fois la mesure de dégradation DM, alors la décision de filtrage est positive (y). Dans ce cas, on considère donc que l'on n'a pas affaire à un véritable bord,
    - Sinon elle est négative (n). Cette fois, la différence de luminance maximale entre les blocs est jugée suffisamment importante pour qu'il s'agisse d'un véritable bord correspondant à un contour naturel qu'il ne faut pas filtrer.

- Parallèlement aux sous-étapes d'évaluation de la dégradation DEGR (51) et de décision de filtrage DEC (52), l'image Im est présentée bloc par bloc à une sous-étape de classification CLASS (53). La sous-étape de classification CLASS(53) associe à un bloc B, une classe Cli choisie parmi un ensemble de classes prédéfinies, 4 classes C11 à C14 dans notre exemple.

- Le bloc B appartient à la classe homogène Cl1 s'il satisfait les conditions suivantes :

$$|m_1 - m_2| < S,$$

    avec :

$$m_1 = \max\{a_{pq}\}_{p=1..P-2,q=1...Q-2}$$

    et

$$m_2 = \min\{a_{pq}\}_{p=1...P-2,q=1...Q-2}.$$

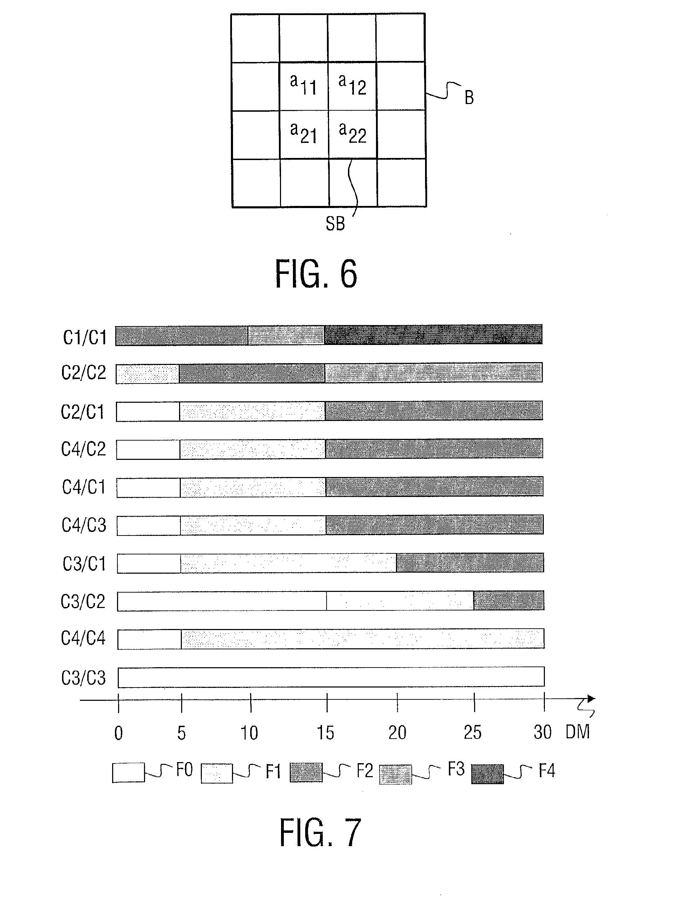

    i.e. m1 est le maximum des coefficients $a_{pq}$ d'un sous-bloc SB défini Fig. 6 qui ne contient pas les segments extérieurs du bloc B, le bloc B comportant P lignes de Q pixels, et m2 est le minimum des coefficients $a_{pq}$ du sous-bloc SB, S étant un seuil égal, par exemple, à 3 dans notre cas.
    - Le bloc B appartient à la classe de lignes Cl2 si, pour toute ligne p, pour p = 1 à P-2, du sous-bloc SB :

$$|m1 - m2| < S,$$

    avec :

$$m1 = \max\{a_{pq}\}_{q=1\ldots Q-2}$$

et

$$m2 = \min\{a_{pq}\}_{q=1\ldots Q-2} \, .$$

i.e. m1 est le maximum des coefficients $a_{pq}$ de la ligne p du sous-bloc SB, et m2 est le minimum des coefficients $a_{pq}$ de la ligne p du sous-bloc SB.

- Le bloc B appartient à la classe de colonnes Cl3 si, pour toute colonne q, pour q=1 à Q-2, du sous-bloc SB:

$$|m1 - m2| < S,$$

avec :

$$m1 = \max\{a_{pq}\}_{p=1\ldots P-2}$$

et

$$m2 = \min\{a_{pq}\}_{p=1\ldots P-2} \, .$$

i.e. m1 est le maximum des coefficients $a_{pq}$ de la colonne q du sous-bloc SB, et m2 est le minimum des coefficients $a_{pq}$ de la colonne q du sous-bloc SB.

- Si aucune des conditions précédentes n'est satisfaite, le bloc B appartient à la classe texturée Cl4.

- A partir de ce stade, on ne considère plus des blocs isolés, mais des paires de blocs adjacents horizontalement et verticalement. Une paire de blocs adjacents (Bj,Bk) associée à une paire de classes (Clm,Cln), est alors traitée par une sous-étape de sélection de filtre SEL (54). Cette sous-étape de sélection de filtres SEL (54) délivre un filtre FI à appliquer à la paire de blocs adjacents (Bj,Bk). Le choix du filtre FI se fait en fonction de la paire de classes (Clm,Cln) et de la mesure de dégradation DM de l'image numérique d'entrée Im, à partir de modèles prédéfinis MOD (55) associant des paires de classes à des filtres, comme illustrés à la Fig. 7, où F0 correspond à ne pas filtrer la paire de blocs.

Si un filtre différent du filtre F0 a été choisi, l'étape de décision de filtrage (42), telle que précédemment décrite, décide si l'artefact de bloc détecté entre les deux blocs adjacents (Bj,Bk) est visible ou pas.

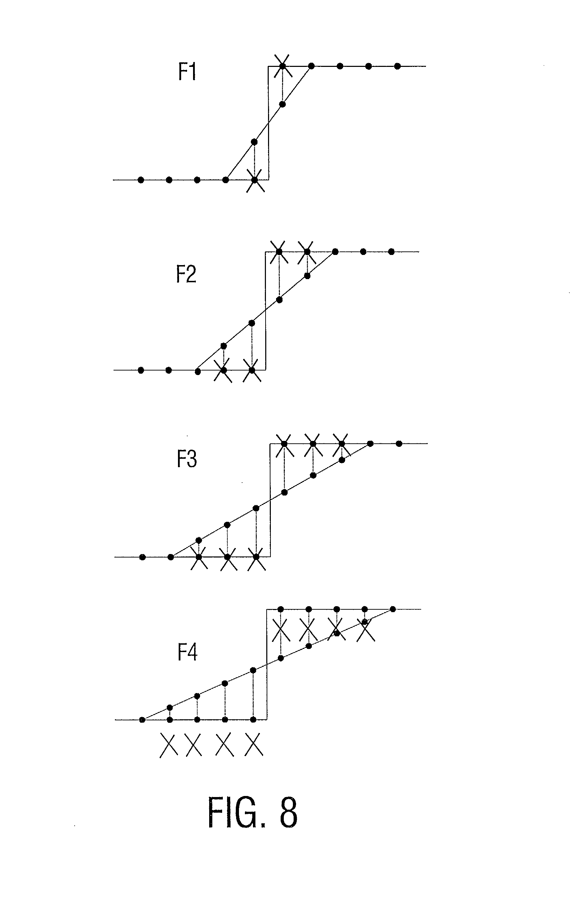

Si l'artefact de bloc est visible, la paire de blocs adjacents (Bj,Bk) et son filtre associé FI sont ensuite présentés en entrée d'une étape de filtrage FILT (43), qui délivre une paire de blocs adjacents filtrés (B'j, B'k). Dans notre exemple, 4 filtres F1 à F4 sont utilisés. Ce sont des filtres passe-bas, linéaires et qui s'appliquent soit dans la direction verticale soit dans la direction horizontale. Ils sont représentés en Fig. 8.

Le procédé selon l'invention délivre ainsi, après traitement des blocs et paires de blocs de l'image numérique décodée Im, une image numérique décodée filtrée ImF.

Comme il a été vu précédemment, l'étape de décision de filtrage est indépendante de l'étape de détection d'artefacts de blocs à partir du moment où cette dernière lui transmet une paire de blocs adjacents entre lesquels un artefact de bloc a été détecté. L'étape de détection d'artefacts de blocs peut être, par exemple, celle décrite dans la demande internationale de brevet WO 01/20912 (référence interne : PHF99579). Une telle étape de détection comprend les sous-étapes suivantes.

- Tout d'abord une sous-étape de détection de pixels appartenant à des contours naturels à l'intérieur d'une image décodée. Pour cela, la sous-étape de détection est basée sur un filtrage gradient utilisant, de préférence, le filtre h1 = [-1 1]. Ce filtre est appliqué horizontalement et verticalement à des pixels de luminance y(i,j) d'une image numérique ou d'une portion d'image numérique de la séquence, où i et j correspondent à la position du pixel dans l'image. On obtient alors des tableaux de pixels filtrés horizontalement xh(i,j) et verticalement xv(i,j) dont on prend la valeur absolue pour obtenir xah(i,j) et xav(i,j). Puis, un seuillage est appliqué à chacun des deux tableaux de pixels filtrés xah(i,j) et xav(i,j). Tous les pixels p(i,j) dont la valeur de luminance filtrée xah[i,j] ou xav[i,j] est supérieure à une valeur de seuil prédéterminée sont détectés comme étant des pixels de contour naturel, et non comme des artefacts de blocs. Les valeurs de seuil horizontal et vertical sont, par exemple, respectivement égales à 35 et 50 pour des valeurs de luminance variant de 0 à 255.

- Un artefact de bloc vertical est alors détecté s'il n'a pas été détecté comme étant un contour naturel et si :

$$\begin{cases} xah[n, j] > xah[n, j-1] + \dfrac{\overline{xah}}{2} \\ xah[n, j] > xah[n, j+1] + \dfrac{\overline{xah}}{2} \end{cases} \forall n \in [i, i+3]$$

De même, un artefact de bloc horizontal est détecté s'il n'a pas été détecté comme étant un contour naturel et si :

$$\begin{cases} xav[i, m] > xav[i-1, m] + \dfrac{\overline{xav}}{2} \\ xav[i, m] > xav[i+1, m] + \dfrac{\overline{xav}}{2} \end{cases} \forall m \in [j, j+3]$$

où $\overline{xa_h}$ et $\overline{xa_v}$ sont respectivement les valeurs moyennes de xah[i,j] et xav[i,j] sur l'image ou portion d'image.

L'étape de décision de filtrage (42), telle que précédemment décrite, décide si l'artefact de bloc détecté entre les deux blocs adjacents est visible ou pas.

S'il est visible, alors l'étape de filtrage (43) vient filtrer la paire de blocs adjacents en utilisant, par exemple, un filtrage linéaire parmi ceux précédemment décrits.

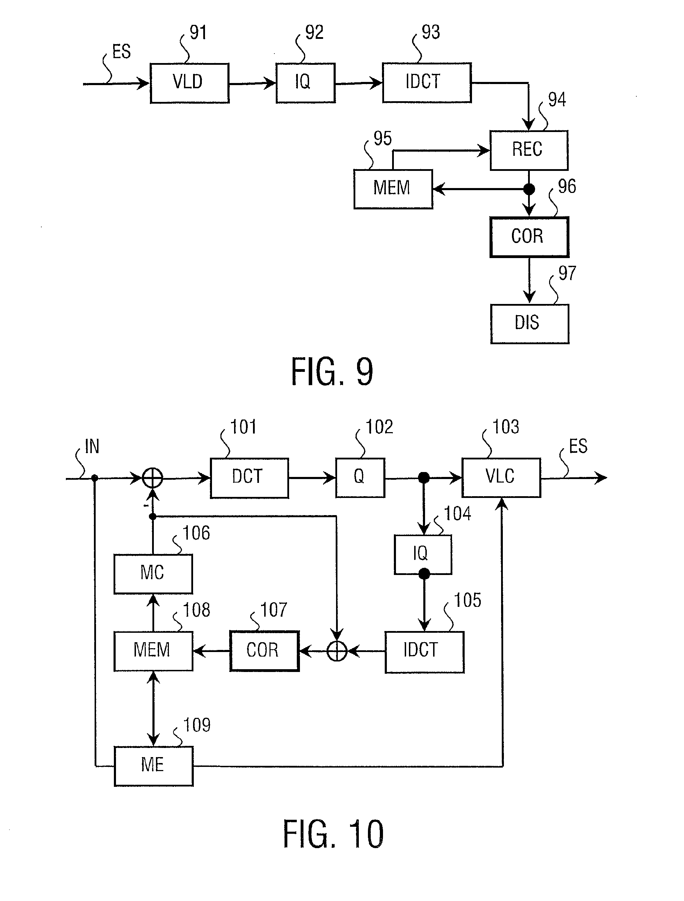

La Fig. 9 illustre le fonctionnement d'un décodeur vidéo apte à fournir des images numériques décodées et comprenant un dispositif de traitement mettant en oeuvre le procédé de traitement selon l'invention.

Le décodeur vidéo comprend :

- des moyens de décodage à longueur variable VLD (91) des données numériques codées ES, aptes à fournir des données quantifiées,
- des moyens de quantification inverse IQ (92) des données quantifiées, aptes à fournir des données transformées,
- un dispositif de transformation fréquentielle inverse, dans notre exemple une transformation en cosinus discrète inverse IDCT (93) de données transformées en données inversement transformées, tel que précédemment décrit.

Le dispositif de décompression comprend en outre une étape de reconstruction REC (94) de l'image bloc de données par bloc de données, grâce à une mémoire d'image MEM (95). Il comprend enfin un dispositif de traitement COR (96) mettant en oeuvre le procédé de traitement selon l'invention, ledit dispositif étant apte à traiter les blocs de l'image numérique reconstruite de manière à fournir des images numériques traitées en vue de son affichage sur un écran DIS (97).

La Fig. 10 illustre le fonctionnement d'un codeur vidéo apte à recevoir des images numériques IN sous forme de blocs de données, et comprenant, dans la boucle de codage, des moyens de transformation fréquentielle inverse suivi d'un dispositif de traitement mettant en oeuvre le procédé de traitement selon l'invention.

Le codeur vidéo (100) comprend :

- un dispositif de transformation fréquentielle directe, ici une transformation en cosinus discrète directe DCT (101) de données numériques vidéo en données transformées, tel que précédemment décrit,
- des moyens de quantification Q (102) des données transformées, aptes à fournir des données quantifiées, et
- des moyens de codage à longueur variable VLC (103) des données quantifiées, aptes à fournir des données codées ES.

Il comprend également une unité de prédiction comprenant en séries :

- des moyens de quantification inverse IQ (104) des données quantifiées, aptes à fournir des données transformées,
- un dispositif de transformation en cosinus discrète inverse IDCT (105) de données transformées en données inversement transformées, tel que précédemment décrit,

- un additionneur des données issues du dispositif de transformation IDCT et d'un dispositif de compensation de mouvement MC (106),
- le dispositif de traitement COR (107) mettant en oeuvre le procédé de traitement selon l'invention et apte à traiter des blocs de données décodées issues de la sortie de l'additionneur de manière à fournir des blocs de données traitées à une mémoire d'image MEM (108),
- la mémoire d'images MEM (108), apte à stocker les images utilisées par le dispositif de compensation de mouvement MC (106), et les vecteurs de mouvements issus d'un dispositif d'estimation de mouvement ME (109), et
- un soustracteur, apte à soustraire les données issues du dispositif de compensation de mouvement des données vidéo numériques d'entrée IN, le résultat de ce soustracteur étant délivré au dispositif de transformation DCT.

Il est également envisageable d'insérer le dispositif de traitement COR (107) entre dispositif de transformation en cosinus discrète inverse IDCT (105) et l'additionneur, le traitement étant effectué sur un signal différentiel et non sur un signal reconstruit.

Le dispositif de traitement mettant en oeuvre le procédé de traitement selon l'invention peut ainsi améliorer les performances d'un codeur vidéo, notamment en termes de qualité de codage mais aussi en termes de débit de sortie. En outre, la mise en cascade du codeur vidéo de la Fig. 10 et du décodeur vidéo de la Fig. 9, permet d'obtenir une excellente qualité d'image, bien supérieure à celle obtenue avec un codeur vidéo standard cascadé avec le décodeur vidéo de la Fig. 9 ou à celle du codeur vidéo de la Fig. 10 cascadé avec un décodeur vidéo standard.

Il est possible d'implémenter le procédé de traitement selon l'invention au moyen d'un circuit de décodeur vidéo ou d'un circuit de codeur vidéo, ledit circuit étant convenablement programmé. Un programme d'ordinateur contenu dans une mémoire de programmation peut provoquer le circuit à effectuer les différentes opérations décrites précédemment en référence à la Fig. 4 ou 5. Le programme d'ordinateur peut aussi être chargé dans la mémoire de programmation par la lecture d'un support de données comme, par exemple, un disque qui contient ledit programme. La lecture peut également s'effectuer par l'intermédiaire d'un réseau de communication comme, par exemple, le réseau internet. Dans ce cas, un fournisseur de service mettra le programme d'ordinateur à la disposition des intéressés sous la forme d'un signal téléchargeable.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

## Revendications

1. Procédé de traitement d'images numériques comprenant des blocs de pixels, ledit procédé comprenant :

   - une étape de détection (41) d'artefacts de blocs entre deux blocs adjacents (Bj,Bk),
   - une étape de filtrage (43) de la paire de blocs adjacents,

   **caractérisé en ce que**
   l'étape de filtrage est appliquée en fonction d'une comparaison entre des valeurs de luminance des pixels des deux blocs adjacents et une fonction de référence représentant une différence de valeurs de luminance minimale visible par un observateur en fonction d'une luminance moyenne d'une zone de l'image.

2. Procédé de traitement selon la revendication 1, dans lequel l'étape de filtrage n'est pas appliquée à une paire de blocs adjacents (Bj,Bk) si les minima (MinP,MinQ) des valeurs de luminance des pixels de chaque bloc sont supérieurs à un premier seuil prédéterminé (T1) ou si les maxima (MaxP,MaxQ) des valeurs de luminance des pixels de chaque bloc sont inférieurs à un second seuil prédéterminé (T2), le second seuil étant inférieur au premier.

3. Procédé de traitement selon la revendication 2, dans lequel les premier et second seuils sont prédéterminés en fonction d'une valeur d'un pas de quantification correspondant à la paire de blocs adjacents.

4. Procédé de traitement selon la revendication 1, dans lequel l'étape de filtrage n'est pas appliquée si une différence de valeurs de luminance (h) entre les deux blocs adjacents est inférieure à une valeur de référence égale à une valeur de la fonction de référence calculée pour une valeur moyenne de luminance (avgBjBk) de la paire de blocs.

5. Procédé de traitement selon la revendication 4, dans lequel l'étape de filtrage n'est pas appliquée si une longueur de l'artefact de bloc (L) est inférieure à une valeur prédéterminée qui est fonction de la différence de valeurs de luminance (h) entre les deux blocs adjacents.

6. Procédé de décodage destiné à fournir des images numériques décodées et comprenant un procédé de traitement selon l'une des revendications 1 à 5, pour traiter les images numériques décodées de manière à fournir des images numériques traitées.

7. Procédé de codage d'images numériques sous forme de blocs de données, comprenant une étape de transformation fréquentielle inverse suivie d'une étape de traitement selon l'une des revendications 1 à 5, apte à traiter des blocs de données décodées issues de l'étape de transformation fréquentielle inverse de manière à fournir des blocs de données traitées.

8. Décodeur vidéo apte à fournir des images numériques décodées et comprenant un dispositif de traitement mettant en oeuvre le procédé de traitement selon l'une des revendications 1 à 5, apte à traiter les images numériques décodées de manière à fournir des images numériques traitées.

9. Codeur vidéo apte à recevoir des images numériques sous forme de blocs de données, et comprenant des moyens de transformation fréquentielle inverse suivis d'un dispositif de traitement mettant en oeuvre le procédé de traitement selon l'une des revendications 1 à 5, apte à traiter des blocs de données décodées issues des moyens de transformation fréquentielle inverse de manière à fournir des blocs de données traitées.

10. Appareil portable comprenant un décodeur vidéo selon la revendication 8, afin d'afficher les images numériques traitées sur un écran dudit appareil.

11. Produit programme d'ordinateur comprenant un jeu d'instructions qui, lorsqu'elles sont chargées dans un circuit, amène celui-ci à effectuer le procédé de traitement d'images numériques selon l'une des revendications 1 à 5.

FIG. 1

FIG. 2

FIG. 3

FIG. 4

FIG. 5

## FIG. 6

## FIG. 7

FIG. 8

ES → 91 VLD → 92 IQ → 93 IDCT → 94 REC

95 MEM → 94 REC

96 COR

97 DIS

## FIG. 9

IN → ⊕ → 101 DCT → 102 Q → 103 VLC → ES

106 MC

108 MEM ← 107 COR ← ⊕ ← 105 IDCT

104 IQ

109 ME

## FIG. 10